# EUROPEAN PATENT APPLICATION

(11) **EP 4 783 302 A1**
(43) Date of publication of application: **29.07.2026**
(21) Application number: 24898255.5
(22) Date of filing: 02.12.2024
(51) Int. Cl.: H01M 10/617, H01M 10/627, H01M 10/42, H01M 10/6563

(54) **AGING RACK AND AGING SYSTEM INCLUDING SAME**

(30) Priority: 30.11.2023 KR 20230170663
(71) Applicant: LG Energy Solution, Ltd., Seoul 07335 (KR)
(72) Inventor: SHIN, Jong Kwang, Daejeon 34122 (KR); KIM, Hong Kyun, Daejeon 34122 (KR); LEE, Won Seok, Daejeon 34122 (KR); KIM, Min Hong, Daejeon 34122 (KR); LEE, Woo Jun, Daejeon 34122 (KR); SHIN, Un Seop, Daejeon 34122 (KR); YOON, Jae Duk, Daejeon 34122 (KR); KIM, Jin Young, Daejeon 34122 (KR)
(74) Representative: Goddar, Heinz J.
(86) International application number: PCT/KR2024/019475
(87) International publication number: WO 2025/116663

(57) **Abstract**

The present invention relates to an aging rack in which secondary batteries are accommodated and an aging process is performed, and an aging system comprising the same, which relates to an aging rack capable of providing temperature uniformity regardless of locations of the secondary batteries, and an aging system comprising the same.

According to one example of the present invention, it is possible to provide an aging rack comprising a blowing device forcibly performing air supply from the rearward of a tray accommodating part to the front through a plurality of perforated nozzles, and an aging system comprising the same.

## Description

### Technical Field

The present invention relates to an aging rack in which secondary batteries are accommodated and an aging process is performed, and an aging system comprising the same, which relates to an aging rack capable of providing temperature uniformity regardless of the location of the secondary batteries, and an aging system comprising the same.

This application claims the benefit of priority based on Korean Patent Application No. 10-2023-0170663 dated November 30, 2023, and Korean Patent Application No. 10-2024-0176412 dated December 2, 2024, the disclosures of which are incorporated herein by reference in their entirety.

### Background Art

In modern society, the use of portable devices such as mobile phones, laptops, camcorders, and digital cameras has become commonplace, and simultaneously development of technologies related to such mobile devices becomes active. In addition, as alternatives for solving air pollution, and the like caused by existing gasoline vehicles using fossil fuels, rechargeable secondary batteries have been used as a power source for electric vehicles (EVs), hybrid electric vehicles (HEVs), plug-in hybrid electric vehicles (P-HEVs), and the like, and the need for expanded development of secondary batteries increases.

Currently commercialized secondary batteries include nickel cadmium batteries, nickel hydrogen batteries, nickel zinc batteries, lithium secondary batteries, and the like, where the lithium secondary batteries of the foregoing have advantages that charging and discharging are free, a self-discharge rate is low, and an energy density is high, are receiving the most attention due to their advantages of free charging and discharging, low self-discharge rate, thereby attracting the most attention.

Secondary batteries can be provided in a pouch type, a rectangular type, and a cylindrical type depending on the type and shape of the battery case.

Lithium secondary batteries are manufactured in the order of an electrode process of manufacturing electrodes, an assembly process of manufacturing an electrode assembly by interposing the electrodes and separators, and manufacturing a secondary battery by embedding them in a secondary battery case with an electrolyte, and an activation process for shipping the manufactured secondary batteries.

The activation process is divided into room-temperature aging, high-temperature aging, and charging and discharging, where the detailed processes can be moved to separate temperature zones and performed, to comply with the respective different temperature conditions. Particularly, the room-temperature aging and the high-temperature aging can be performed in separate aging rooms.

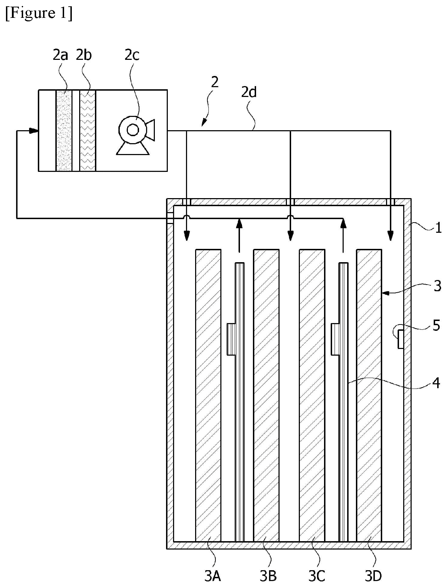

Figure 1 illustrates one example of a conventional aging system, which may be an aging system in which the room-temperature aging or the high-temperature aging is performed.

The high-temperature aging and the room-temperature aging are processes in which secondary batteries are stored under constant temperature conditions for a long period of time using a rack (3). The secondary batteries can be first accommodated in a tray formed in a grid shape, and a plurality of trays can be laminated to form a tray set, and can be accommodated in the rack (3) in the form of the tray set. In addition, a tray accommodating part in a grid shape can also be formed in the rack (3) itself.

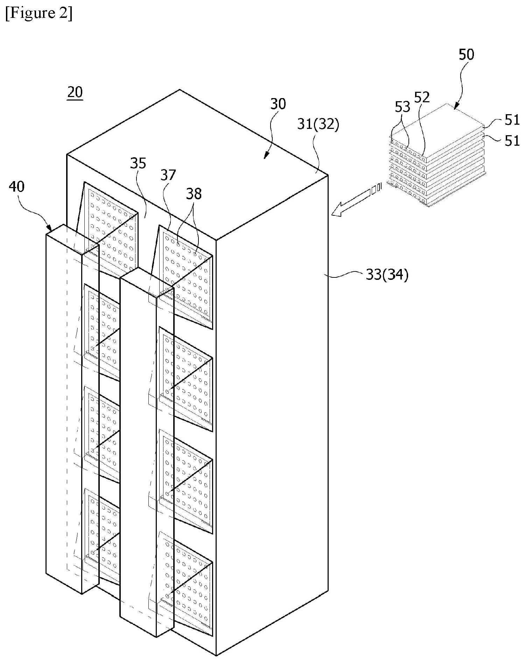

As one example, as shown in Figure 2, tray accommodating parts in 4 rows and 2 columns can be formed in the rack (3), and the tray set in which 6 trays are laminated can be accommodated in each tray accommodating part.

The tray structure and tray set as above may be suitable for storing and transferring cylindrical secondary batteries. In each tray accommodating part, the front surface is opened, and the top, bottom, and rear surfaces are closed, whereby the tray set can be entered and exited through the front surface.

As one example, as shown in Figure 1, the racks (3) may be provided to face each other, and a stacker crane (4) for input and recovery of the tray sets may be provided between the rack (3) and the rack (3).

That is, the left rack (3A) and the right rack (3B) may face each other, and the tray sets may be loaded in or retrieved from the left rack (3A) and the right rack (3B) through the stacker crane (4) located in the center. In other words, the open front surface of the left rack and the open front surface of the right rack face each other.

Similarly, the left rack (3C) and the right rack (3B) may also face each other, and a separate stacker crane (4) may be provided in the center.

The aging room (1) may be a very large indoor space, and multiple racks (3) may be provided inside the aging room (1). A temperature inside the aging room (1) is controlled through an air conditioning system (2). That is, the aging process may be performed by controlling the temperature inside the aging room (1) to a certain temperature condition through the air conditioning system (2).

The air conditioning system (2) may comprise a filter (2a), a heater (2b), a blast fan (2c), and a duct (4). In the case of high-temperature aging, the temperature condition may be set to approximately 60°C, and the temperature control may be performed so that the temperature deviation is within approximately 3°C. To this end, the air conditioning system (2) may comprise a temperature sensor (5). The temperature sensor (5) may also be provided in the intake side duct or the exhaust side duct, and may also be provided inside the aging room.

Since the aging process is performed for a long time, it can be collectively performed for many secondary batteries in a very wide aging room (1). That is, it is important to ensure temperature uniformity for each of many secondary batteries. If the temperature uniformity is not provided for a specific secondary battery, it is not easy to secure consistent product performance.

Particularly, in the case of a rack in which the tray accommodating part with only the opened front surface is formed, air flow may not be smooth at the location where the secondary batteries are accommodated. Therefore, the temperature uniformity required for the aging process may not be secured.

That is, even within a specific tray accommodating part, a temperature deviation may occur depending on where the secondary batteries are located. As one example, the secondary batteries located at the center of the tray have uneasy heat circulation compared to the secondary batteries located at the outer portion of the tray, whereby the temperature may increase excessively.

In addition, a temperature deviation may also occur depending on which tray accommodating part the secondary batteries are located even within a specific rack. As one example, in the case of a rack in which the tray accommodating part is provided in four layers, an aging temperature deviation may occur between the secondary batteries located on the first layer and the secondary batteries located on the fourth layer.

Meanwhile, in the case of the conventional aging rack and aging system, the aging temperature is controlled through air conditioning of the entire aging room space, so that when the temperature deviation occurs in some regions of the aging room or some regions of the aging rack, it is not easy to flexibly respond.

Furthermore, in the conventional case, particularly, the high-temperature aging process and the room-temperature aging process are performed in different aging rooms, and as a result, cell migration inevitably occurs between the high-temperature aging room and the low-temperature aging room, whereby there is a problem that the time required for the entire activation process increases.

### Disclosure

### Technical Problem

The present invention is intended to solve problems of conventional aging racks and aging systems.

Through one example of the present invention, it is intended to provide an aging rack and an aging system capable of providing an aging rack in which a front surface is opened with a uniform air flow, thereby providing a uniform temperature condition regardless of locations.

Through one example of the present invention, it is intended to provide an aging rack and an aging system capable of performing high-temperature aging and room-temperature aging in the same aging rack and the same aging room.

Through one example of the present invention, it is intended to provide an aging rack and an aging system capable of immediately correcting a deviation of a set aging temperature, and precisely controlling and maintaining an aging temperature zone.

### Technical Solution

To achieve the above-described objects, according to one example of the present invention, it is possible to provide an aging rack comprising a blowing device forcibly performing air supply from the rearward of a tray accommodating part to the front through a plurality of perforated nozzles, and an aging system comprising the same.

The rear surface of the aging rack may be closed by a rear wall, and the front surface may be opened. A tray in which a plurality of cells is accommodated may be entered and exited through the opened front surface. That is, the front surface of the tray accommodating part may be opened, and the rear surface may be closed. However, the rear surface of the tray accommodating part may be communicated with the outside through a plurality of perforated nozzles.

Specifically, according to one example of the present invention, it is possible to provide an aging rack comprising: a cabinet forming an appearance and having an open front surface; a tray accommodating part provided inside the tray cabinet, and accommodating a tray set in which trays that a plurality of cells is accommodated are laminated in multiple stages and formed; a perforated plate provided with a plurality of perforated nozzles, to supply air from the rearward of the tray cabinet to the inside of the tray accommodating part; and a blowing device connected to the rear surface of the cabinet to forcibly supply air through all the plurality of perforated nozzles, and an aging system comprising the same.

The perforated plate may be a part of the rear wall of the cabinet, and the perforated plate may be a constitution mounted on the rear wall of the open cabinet.

The perforated plate may form a partial region of the rear surface of the tray accommodating part and may be formed to face the rear surface of the tray set to be accommodated. It is also preferable that the position of the perforated plate is a position corresponding to the rear surface of the tray set.

It is preferable that the tray accommodating part is provided in multiple parts by being mutually partitioned to up and down parts, and the perforated plate is provided in multiple plates to correspond to each tray accommodating part.

The cabinet may comprise an upper wall, a rear wall, a lower wall, and both side walls, and may have a plurality of partition walls provided inside the cabinet, to form a plurality of tray accommodating parts. The partition walls may comprise a horizontal partition wall partitioning upper and lower tray accommodating parts, and may also comprise a vertical partition wall partitioning left and right tray accommodating parts.

It is preferable that the blowing device is closely coupled with the perforated plate in a region surrounding all the plurality of perforated nozzles. That is, the air forcibly supplied through the blowing device does not leak to the outside, and the entire air may be supplied to the inside of the tray accommodating part through the plurality of perforated nozzles.

Therefore, an air flow flowing from the rear to the front may be generated inside the tray accommodating part through the perforated nozzles. Such an air flow may be formed in multiple flows to correspond to the number of perforated nozzles.

The blowing device may comprise a blast fan, which is preferably a partial constitution of the aging rack. The blowing device may be mounted at the rearward of the aging rack. Here, a stacker crane for moving the tray set is not provided at the rear of the aging rack. That is, a free space may be formed at the rearward of the aging rack. For this reason, it is possible to mount the blowing device as a partial constitution of the aging rack at the rearward of the aging rack.

The blowing device may be provided to correspond to each tray accommodating part.

The blowing device may comprise a main duct and transfer ducts branched from the main duct and connected to each perforated plate. In the main duct, the air introduced to the inside of the main duct may be divided into multiple transfer ducts and supplied. The air introduced into the transfer duct may be introduced into the corresponding tray accommodating part by penetrating the corresponding perforated plate.

It is preferable that the transfer duct is provided so that the cross-sectional area increases in the air blowing direction.

The blowing device may comprise a blast fan forcibly sucking external air to the inside of the main duct. The blast fan may be mounted on the main duct to forcibly suck external air to the inside of the main duct.

The main duct may be provided vertically and longitudinally at the rearward of the cabinet, and the blast fan may be a single blast fan provided in the up-and-down central portion of the main duct. In the main duct, the air sucked through the single blast fan may be branched to multiple transfer ducts and supplied.

The tray accommodating part may be provided in multiple parts by being mutually partitioned to right and left parts, and the main duct may be provided by being mutually divided as a left main duct and a right main duct.

The left main duct may correspond to the up-and-down tray accommodating parts on the left side, and the right main duct may correspond to the up-and-down tray accommodating parts on the right side. A single blast fan may be provided in the left main duct, and a single blast fan may also be provided in the right main duct.

Of course, the single blast fan may be provided between the left main duct and the right main duct. That is, the external air sucked through the single blast fan may be introduced into the left and right main ducts. Therefore, it is preferable that the single blast fan is provided at the up-and-down central portion of the left main duct and the right main duct.

The blowing device may comprise a heat exchanger heating or cooling the sucking air. The heat exchanger may comprise a heater, and a heat exchange capacity may be controlled.

It is preferable that the tray is in a grid shape, wherein cells are seated on each grid, and is formed to have multiple air flow paths penetrating from the rearward to the front between the cell and the cell.

As one example, a grid partition wall may be provided inside the outer shell partition wall of the tray, and the grid partition wall may have a height lower than the height of the outer shell partition wall. It is preferable that through-holes are formed in the rear partition wall and the front partition wall among the outer shell partition walls. Therefore, an air flow path may be formed between the through-hole of the rear partition wall and the through-hole of the front partition wall.

The aging rack characterized in that the plurality of perforated nozzles is formed to correspond one-to-one at the same height as that of the plurality of air flow paths.

The specifications of the tray and the specifications of the cells mounted on the tray are constant, and therefore, the specifications of the tray set formed by laminating the trays in multiple stages are also constant. That is, the position and height at which the tray set is accommodated in the tray accommodating part may also be constant. In other words, the positions of the plurality of tray through-holes may be constant, and it is preferable that the plurality of perforated nozzles is formed to correspond to these positions.

Therefore, an air flow may be formed horizontally and continuously by penetrating the tray from the perforated nozzle.

The perforated nozzle may be formed in a circular shape or a left-right elongated oval shape.

In order to achieve the above-described objects, according to one example of the present invention, it is possible to comprise an aging system comprising a plurality of aging racks provided so that front openings face each other in an aging room, and each having a tray accommodating part; a stacker crane provided between the aging rack and the aging rack and provided so that tray sets are input and retrieved in both directions; and a blowing device forcibly supplying air to each of the insides of the plurality of tray accommodating parts provided in the aging rack and accommodating the tray set.

The stacker crane may be provided between two aging racks facing each other. Tray sets may be input to both aging racks through one stacker crane.

It is preferable that the aging rack comprises a perforated plate having a plurality of perforated nozzles provided to supply air into the inside of the tray accommodating part from the rearward, and the blowing device comprises a blowing device connected to the rear surface of the aging rack and forcibly supplying air through all the plurality of perforated nozzles.

It is preferable that the perforated plate and the blowing device are some constitutions of the aging rack, which enable bundle manufacturing, bundle handling, and bundle installation.

It is preferable that the tray accommodating part is provided in multiple parts by being mutually partitioned from top to bottom and from left to right inside the aging rack, and the perforated plate is provided in multiple plates to correspond to each of the tray accommodating parts.

The tray set is formed by laminating multiple trays in multiple stages.

It is preferable that the tray is in a grid shape, wherein cells are seated on each grid, and is formed to have multiple air flow paths penetrating from the rearward to the front between the cell and the cell.

It is preferable that through-holes forming an inlet end and an outlet end of the air flow path are formed in the outer rear wall and front wall of the tray, respectively. The outer shell wall surrounding the outer shells of the tray may comprise a rear wall, a front wall, and right-and-left side walls.

A plurality of partition walls may be provided inside the outer shell wall, and a plurality of grid zones may be formed through the partition walls, and cells may be placed in each grid zone. It is preferable that the outer shell wall has a height higher than the height of the partition wall. Therefore, the air flow path may be formed on the upper portion of the partition wall.

It is preferable that the plurality of perforated nozzles is formed to correspond one-to-one with the plurality of air flow paths formed in the tray set.

The perforated nozzle may be formed in a circular shape or a left-right elongated oval shape. In addition, the through-hole may have a circular shape or a left-right elongated oval shape to correspond to the shape of the perforated nozzle.

Meanwhile, the height deviation at the position where the tray set is accommodated and mounted may be very small. On the other hand, the right-and-left deviation at the position where the tray set is mounted may be relatively large. In this case, the alignment between the perforated nozzle and the through-hole may be misaligned. To solve this problem, the perforated nozzle and the through-hole may be more preferably a rectangular shape or an oval shape, which is elongated left and right, rather than a circular shape.

It is preferable that the blowing device comprises a blast fan sucking external air and a heat exchanger heating or cooling the sucking external air.

An air conditioning device performing air conditioning for the entire aging room internal space may be provided individually with the blowing device.

### Advantageous Effects

Through one example of the present invention, it is possible to provide an aging rack and an aging system capable of providing an aging rack in which a front surface is opened with a uniform air flow, thereby providing a uniform temperature condition regardless of locations.

Through one example of the present invention, it is possible to provide an aging rack and an aging system capable of performing high-temperature aging and room-temperature aging in the same aging rack and the same aging room. Through this, a cell transfer process can be omitted between high-temperature aging and room-temperature aging.

Through one example of the present invention, it is possible to provide an aging rack and an aging system capable of immediately correcting a deviation of a set aging temperature, and precisely controlling and maintaining an aging temperature zone.

Through one example of the present invention, it is possible to expect effects of cell capacity improvement and low-voltage selection capability improvement through aging temperature deviation improvement, and it is possible to expect a process time reduction effect through temperature matching.

### Description of Drawings

Figure 1 is a schematic diagram of conventional aging rack and aging system,
Figure 2 illustrates one example of an aging rack according to one example of the present invention,
Figure 3 illustrates a positional relationship between a tray accommodating part and a tray set,
Figure 4 illustrates appearances of rearward of an aging rack and mounting of a blowing device according to one example of the present invention,
Figure 5 illustrates appearances of rearward of an aging rack and mounting of a blowing device according to another example of the present invention,
Figure 6 illustrates an appearance in which flows of air supplied to a tray accommodating part are seen from above, and
Figure 7 illustrates an appearance in which flows of air supplied to a tray accommodating part are seen from the side.

### Best Mode

Hereinafter, an aging rack and an aging system according to one example of the present invention will be described in detail with reference to the attached drawings.

Figure 2 illustrates one example of an aging rack according to one example of the present invention.

In the aging rack, an appearance is formed through a cabinet (30), and a tray accommodating part, in which a tray or a tray set is accommodated, is formed inside the cabinet.

The cabinet (30) may comprise an upper wall (31), a lower wall (32), both side walls (33, 34), and a rear wall (35). A plurality of tray accommodating parts partitioned from each other by partition walls (36) may be formed inside the cabinet.

Here, the cabinet (30) and the tray accommodating part may be provided so that only the front surface is opened and the upper, lower, left, right, and rear sides are closed. As oner example, when an ignition occurs in a secondary battery or cell where an aging process is performed, it may be for preventing it from being transmitted to surrounding tray accommodating parts (30a). The cylindrical cell is in the form of a sealed can, which may have a characteristic of rapidly spreading to the surroundings when a fire occurs. For this reason, only the front surface portion is generally opened.

Due to the structure of such a tray accommodating part (30a), the air flow is not smooth at the location where the cell is accommodated. That is, if only the temperature inside the aging room where the aging rack is located is controlled, the required temperature uniformity may not be very good at the location where the cell is accommodated. This has a great impact on product performance or manufacturing performance, such as product quality or screening force.

The general shape and structure of the aging rack according to the present example may be the same as or like those of the conventional aging rack. Therefore, in this specification the differences between the present example and the conventional aging rack will be mainly described. Through these differences, it will be possible to improve the product quality by generating smooth and intended air flows to increase the temperature uniformity.

The aging rack (20) according to the present example may comprise a cabinet (30) and a blowing device (40). A plurality of aging racks (20) may be provided in the aging room, and each aging rack (20) may individually include a blowing device (40). Therefore, the aging racks (20) having the blowing device (40) may be manufactured, handled, and installed comprehensively.

The aging rack (20) may comprise a perforated plate (37), and a plurality of perforated holes or perforated nozzles (38) may be formed in the perforated plate (37). The perforated plate (37) may be a part of the rear wall of the cabinet, and may be a constitution which is mounted on the rear wall.

A plurality of perforated nozzles (38) may be regularly arranged in the perforated plate (37), and the number and positions of the perforated nozzles may be set to form a straight line with the through-holes (53) formed in the tray (51), as described below. As one example, the perforated nozzles (38) may be formed by eight in width and six in length. This means that as eight through-holes are formed horizontally in the tray (51), and six trays are laminated, it is possible to form a tray set (50).

As shown, the rearward of the tray accommodating part (30a) is blocked by the rear wall, but it may be communicated with the outside only through the perforated nozzles (38). External air may be forcibly introduced to the inside of the tray accommodating part through all such perforated nozzles (38). An opening (30b) is formed in the front of the tray accommodating part (30a), and trays are entered and exited through the opening. In addition, the air forcibly introduced into the tray accommodating part is also discharged to the outside through the opening (30b).

A blowing device (40) may be provided as a constitution for forcibly supplying air, and the blowing device (40) may be disposed or mounted at the rearward of the cabinet as a constitution mounted on the aging rack (20).

As shown, a main duct (41) may be provided, to supply air to a plurality of tray accommodating parts, and a plurality of transfer ducts (42) branched from the main duct (41) may be provided. External air may be sucked into the main duct (41), and the sucked air may be branched and supplied to each transfer duct (42).

The transfer duct (42) may be connected to the rearward of the perforated plate (37). Preferably, the transfer duct (42) may be closely connected to the perforated plate, and it is preferable to prevent air from leaking between the transfer duct and the perforated plate except for the perforated nozzles. Through this, the flow pressure of the air formed through the perforated nozzles may be effectively increased.

The transfer duct (42) may be a reducing duct, and it is preferable that the cross-sectional area on the perforated plate side is larger than the cross-sectional area on the main duct side. As one example, the transfer duct (42) may have a pipe diameter of 80 mm and may be connected to the main duct, and then may be expanded to correspond to the area of the perforated plate to surround the perforated plate. Particularly, the transfer duct (42) may be provided to surround all the perforated nozzles formed on the perforated plate.

It is preferable that the tray set (50) is accommodated in the tray accommodating part (30a) while having free spaces in the left, right, top, and bottom directions. That is, the tray set is positioned in the middle of the left, right, top, and bottom of the accommodating part, and thus, it is preferable that the perforated plate (37) is also provided in the central portion of the rear surface of the tray accommodating part (30a). The area of the tray accommodating part may be the same as or like the area where the tray set is projected onto the rear surface of the tray accommodating part.

Therefore, according to the present example, the blowing device (40) may be closely coupled with the perforated plate in a region surrounding all the plurality of perforated nozzles, thereby forming effective air flows inside the tray accommodating part.

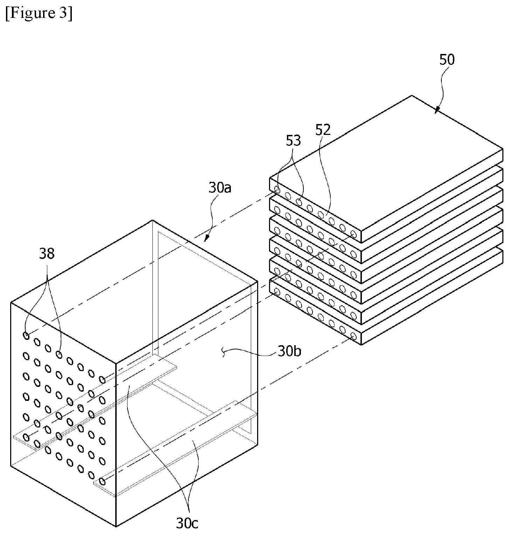

Figure 3 illustrates a positional relationship between a tray accommodating part (30a), a perforated plate (37) forming the rear surface of the tray accommodating part, and a tray set (50) accommodated in the tray accommodating part. Particularly, Figure 3 illustrates a relationship between each perforated nozzle or perforated hole formed in a perforated plate, and a through-hole (53) formed in a tray.

A support (30c) for supporting the tray (51) or the tray set (50) may be provided inside the tray accommodating part (30a). The support may be formed in the form of a rail.

As illustrated, the perforated plate may be positioned to face the rear surface of the tray set. In addition, it is preferable that the through-holes formed in the tray set and the perforated nozzles formed in the perforated plate are formed to correspond one-to-one.

As one example, the perforated nozzles (38) of the perforated plate may be formed in a total of 48 in the form of an 8 X 6 matrix, and through-holes (53) may also be formed in the tray set (50) in a total of 48 in the form of an 8 X 6 matrix.

The through-holes (53) of the tray set may be formed in the outer shell walls (52) of the tray, especially in the rear wall and the front wall, and the through-hole of the front wall and the through-hole of the rear wall may be formed to face each other in a straight line. That is, an air flow path through which air flows may be formed between both through-holes. Cells may be located on both sides of the air flow path.

Therefore, the air flow path formed between the through-hole (53) formed in the rearward of the tray set (50) and the through-hole (53) formed in the front may form a straight line with the perforated nozzle. It can be known therefrom that the air penetrating the perforated nozzle with a strong pressure can flow forward in a straight line, and can be discharged to the front of the cabinet along the air flow path of the tray set.

The tray set may be formed by laminating individual trays, and the individual trays may also be individually accommodated in the tray accommodating part with being spaced up and down at a certain interval.

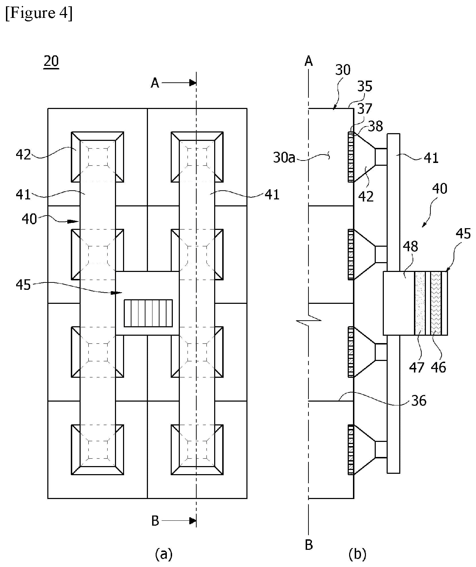

Figure 4 illustrates a rear appearance and a rear side appearance of an aging rack according to one example of the present invention.

The rear surface (35) of the aging rack (20) may be provided with a perforated plate (37) to correspond to each tray accommodating part, and as one example, a main duct (41) may be provided for four upper and lower tray accommodating parts. Air forcibly introduced to the inside of the main duct (41) may be introduced into transfer ducts (42) and then supplied into the tray accommodating parts.

A blowing device or a blast fan (47) may be provided in the main duct (41), and external air may be forcibly introduced to the inside of the main duct (41) through the blast fan. The blast fan may be located at the up-and-down central portion of the main duct (41).

Meanwhile, when the tray accommodating parts are partitioned left and right in the aging rack (20), the main ducts (41) may be provided on both sides. As one example, a left main duct corresponding to four upper and lower tray accommodating parts on the left and a right main duct corresponding to four upper and lower tray accommodating parts on the right may be provided.

The blast fan (47) may be provided in each of the left main duct and the right main duct. Alternatively, a single blast fan may also be provided between the left main duct and the right main duct.

The aging rack (20) may be positioned inside the aging room where the internal temperature is actively controlled, and thus the temperature outside the aging rack (20) may be controlled to an aging temperature. In other words, by supplying external air to the insides of the tray accommodating parts, it is possible to provide all the insides of the tray accommodating part with an aging temperature environment uniformly.

In this case, the blowing device (40) including the blast fan (47) and the ducts (41, 42) may only perform a function of supplying external air to the inside of the tray accommodating part. In other words, a heat exchange function for heating or cooling the external air may not be required.

Alternatively, it may be possible to actively control the aging temperature through the blowing device (40). In this case, an air conditioning system performing air conditioning of the entire inside of the aging room may subsidiarily control the aging temperature. Of course, the air conditioning system may function as an air cleaner, and exclude or minimize the heat exchange function.

The blowing device (40) may comprise a heat exchanger (46), and the heat exchanger (46) may be a heater, to perform high-temperature aging. Of course, the blowing device (40) may also comprise an air filter (47).

The external air may be heated to an aging temperature through the heat exchanger (46), and the heated air may be supplied to each tray accommodating part without leakage. At this time, the heating control of the heater, and the air volume and air pressure control of the blast fan may be performed. For this reason, it is preferable that the blast fan is a BLDC blast fan.

Therefore, according to the present example, it is possible to easily provide the plurality of tray accommodating parts with the aging temperature environment through the blowing device. In addition, since the air conditioning system of the aging room space can be replaced, the implementation of an immediate aging temperature environment can be possible, and the space utilization can be increased due to the omission of the air conditioning system.

Meanwhile, since the blast fan is provided in the aging rack, it is possible to block the spread of the fire early through a blast fan operation stop logic in conjunction with the fire. In this case, a fire detector may also be provided for each aging rack or each tray accommodating part. When the fire is detected by the fire detector, the blast fan operation is stopped, so that the spread of the fire may be blocked early.

In addition, a damper, as an air volume control device, may be provided between the main duct (41) and the transfer duct (42). The air volume forcibly supplied to the inside of the tray accommodating part may be adjusted through increase or decrease of an opening degree, which means that the air volumes of the tray accommodating parts may individually be adjusted. Therefore, in this case, since the entire air volume sucked into the main duct needs to be variably controlled, it is preferable that the blast fan is an inverter blast fan capable of variably controlling an air intake volume. Furthermore, trays may not be accommodated in a specific tray accommodating part, or trays may not be accommodated in a specific aging rack. Therefore, only when trays are accommodated, the operation of the damper may be controlled so that air is supplied.

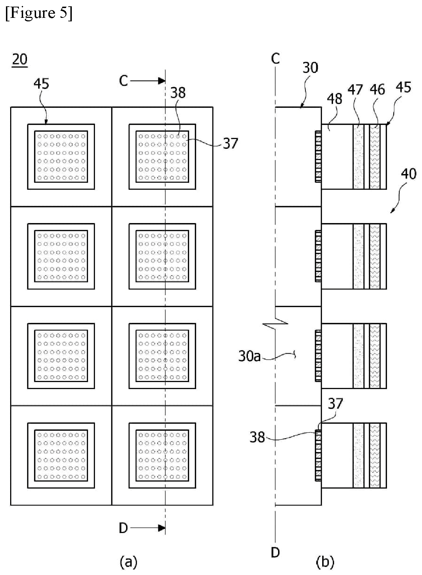

Figure 5 illustrates one example of an aging rack according to another example of the present invention. The present example is characterized in that blowing devices (4) are individually provided for each individual tray accommodating part.

The features of the perforated plate and the perforated nozzle as described above may also be equally applied to the present example.

In the present example, the blowing device (40) may also comprise a blast fan (45), and the main duct and the transfer duct as described above may be omitted. The blast fan (45) may supply air directly to the tray accommodating parts through the perforated nozzles by sucking external air. The blowing device (40) may comprise a heat exchanger (46). Of course, the aging temperature may be controlled through control of the blast fan and the heat exchanger.

According to the present example, it can be known that the aging temperature can be independently controlled for each individual tray accommodating part. As one example, it can be made so that the aging temperatures are different between adjacent tray accommodating parts. In addition, the blowing device (40) may be controlled to operate only when trays are accommodated inside the tray accommodating part. Therefore, it is possible to control the requirements for each cell product on which aging is performed in a customized manner.

According to the present example, as in the above-described example, it is possible to control the operation of the blast fan in conjunction with the fire detector. By stopping the operation of the blast fan, it is possible to individually block the oxygen supply.

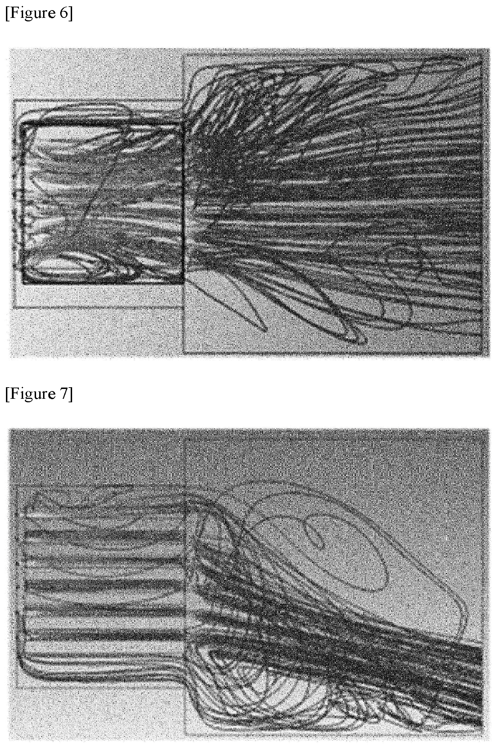

Figure 6 is an appearance in which flows of air supplied to a tray accommodating part are seen from above, and Figure 7 is an appearance in which flows of air supplied to a tray accommodating part are seen from the side.

As illustrated, it can be known that the air flows penetrating the plurality of perforated nozzles disposed in grids penetrate the tray set in the form of a straight line.

It can be known that the air flow penetrating the tray accommodating part back and forth can be smoothly generated. That is, it can be known that a streamline passes through the tray accommodating part from the rear to the front without bending or breaking, and then continues to the front of the opened cabinet.

Particularly, it can be known that the streamline is connected in a straight line between the rear wall through-hole and the front wall through-hole of the tray. As a result, it can be known that the straight alignment between the perforated nozzle, the tray rear wall through-hole, and the tray front wall through-hole is important.

It can be known that the streamline of the air discharged from the tray accommodating part meets the expanded space, and appears in a form that it spreads right and left, and bends downward. In the case of high-temperature aging, streamlines like the illustrated form may appear because the heated air is cold by supplying heat to the cells.

Therefore, according to the above-described present examples, it is possible to provide all the cells accommodated in the tray accommodating part with a uniform aging temperature environment, and it is possible to shorten the aging process time through temperature matching. In addition, by significantly improving the temperature deviation between the cells, cell capacity improvement and performance improvement can be allowed, and it is also possible to improve low-voltage selection capability.

### Industrial Applicability

It is described in the Detailed Description of Invention.

## Claims

1. An aging rack comprising:
a cabinet forming an appearance and having an open front surface;
a tray accommodating part provided inside the tray cabinet, and accommodating a tray set in which trays that a plurality of cells is accommodated are laminated in multiple stages;
a perforated plate provided with a plurality of perforated nozzles, to supply air from the rearward of the tray cabinet to the inside of the tray accommodating part; and
a blowing device connected to the rear surface of the cabinet to forcibly supply air through all the plurality of perforated nozzles.

2. The aging rack according to claim 1, **characterized in that**
the tray accommodating part is provided in multiple parts by being mutually partitioned to up and down parts, and the perforated plate is provided in multiple plates to correspond to each tray accommodating part.

3. The aging rack according to claim 2, **characterized in that**
the plurality of perforated plates forms the rear surface of the tray cabinet.

4. The aging rack according to claim 3, **characterized in that**
the blowing device is closely coupled with the perforated plate in a region surrounding all the plurality of perforated nozzles.

5. The aging rack according to claim 3, **characterized in that**
the blowing device is provided to correspond to each tray accommodating part.

6. The aging rack according to claim 3, **characterized in that**
the blowing device comprises a main duct and transfer ducts branched from the main duct and connected to each perforated plate.

7. The aging rack according to claim 6, **characterized in that**
the transfer duct is provided so that the cross-sectional area increases in the air blowing direction.

8. The aging rack according to claim 7, **characterized in that**
the blowing device comprises a blast fan forcibly sucking external air to the inside of the main duct.

9. The aging rack according to claim 8, **characterized in that**
the main duct is provided vertically and longitudinally at the rearward of the cabinet, and the blast fan is a single blast fan provided in the up-and-down central portion of the main duct.

10. The aging rack according to claim 9, **characterized in that**
the tray accommodating part is provided in multiple parts by being mutually partitioned to right and left parts, and the main duct is provided by being mutually divided as a left main duct and a right main duct.

11. The aging rack according to claim 10, **characterized in that**
the single blast fan is provided between the left main duct and the right main duct.

12. The aging rack according to any one of claims 3 to 11, **characterized in that**
the blowing device comprises a heat exchanger heating or cooling the sucking air.

13. The aging rack according to any one of claims 3 to 11, **characterized in that**
the tray is in a grid shape, wherein cells are seated on each grid, and is formed to have multiple air flow paths penetrating from the rearward to the front between the cell and the cell, and
the plurality of perforated nozzles is formed to correspond one-to-one at the same height as that of the plurality of air flow paths.

14. The aging rack according to claim 13, **characterized in that**
the perforated nozzle is formed in a circular shape or a left-right elongated oval shape.

15. An aging system **characterized by** comprising:
a plurality of aging racks provided so that front openings face each other in an aging room, and each having a tray accommodating part;
a stacker crane provided between the aging rack and the aging rack and provided so that tray sets are input and retrieved in both directions; and
a blowing device forcibly supplying air to each of the insides of the plurality of tray accommodating parts provided in the aging rack and accommodating the tray set, wherein
the aging rack comprises a perforated plate having a plurality of perforated nozzles provided to supply air into the inside of the tray accommodating part from the rearward, and
the blowing device comprises a blowing device connected to the rear surface of the aging rack and forcibly supplying air through all the plurality of perforated nozzles.

16. The aging system according to claim 15, **characterized in that**
the tray accommodating part is provided in multiple parts by being mutually partitioned from top to bottom and from left to right, and the perforated plate is provided in multiple plates to correspond to each of the tray accommodating parts.

17. The aging system according to claim 16, **characterized in that**
the tray set is formed by laminating multiple trays in multiple stages,
the tray is in a grid shape, wherein cells are seated on each grid, and is formed to have multiple air flow paths penetrating from the rearward to the front between the cell and the cell,
through-holes forming an inlet end and an outlet end of the air flow path are formed in the outer rear wall and front wall of the tray, respectively, and
the plurality of perforated nozzles is formed to correspond one-to-one with the plurality of air flow paths formed in the tray set.

18. The aging system according to claim 17, **characterized in that**
the perforated nozzle is formed in a circular shape or a left-right elongated oval shape.

19. The aging system according to claim 16, **characterized in that**
the blowing device comprises a blast fan sucking external air and a heat exchanger heating or cooling the sucking external air.

20. The aging system according to claim 16, **characterized in that**
an air conditioning device performing air conditioning for the entire aging room internal space is provided individually with the blowing device.
